# EUROPEAN PATENT APPLICATION

(11) **EP 4 521 157 A1**
(43) Date of publication of application: **12.03.2025**
(21) Application number: 22943112.7
(22) Date of filing: 25.05.2022
(51) Int. Cl.: G02B 27/01, G02B 27/20

(54) **FLOATING OPTICAL DEVICE, OPTICAL MODULE AND OPTICAL SYSTEM**

(71) Applicant: Huawei Technologies Co., Ltd., Shenzhen, Guangdong 518129 (CN)
(72) Inventor: REN, Hui, Shenzhen, Guangdong 518129 (CN); ZHANG, Youming, Shenzhen, Guangdong 518129 (CN)
(74) Representative: Gill Jennings & Every LLP
(86) International application number: PCT/CN2022/095000
(87) International publication number: WO 2023/225907

(57) **Abstract**

This application provides a floating optical device, an optical module, and an optical system that are configured to perform floating display. The floating optical device includes a focusing layer, a transmission layer, and a convergence layer that are sequentially stacked in a direction of an optical axis. The focusing layer includes a plurality of focusing units that are periodically arrayed. The convergence layer includes a plurality of convergence units that are periodically arrayed. The plurality of focusing units and the plurality of convergence units are in a one-to-one correspondence in the direction of the optical axis. **In** the focusing unit and the convergence unit that correspond to each other, the focusing unit is configured to modulate incident light rays, to concentrate incident light rays that are parallel to each other to a same incident concentration point on the incident surface of the transmission layer. The transmission layer modulates the light rays of the incident concentration point into light rays of an emergent concentration point on an emergent surface of the transmission layer in a one-to-one correspondence. The convergence unit is configured to modulate the light rays of the emergent concentration point, to converge light rays of a same emergent concentration point into emergent light rays that are parallel to each other. A relatively low light loss exists during floating imaging of the floating optical device.

## Description

### TECHNICAL FIELD

This application relates to the field of display technologies, and in particular, to a floating optical device, an optical module, and an optical system.

### BACKGROUND

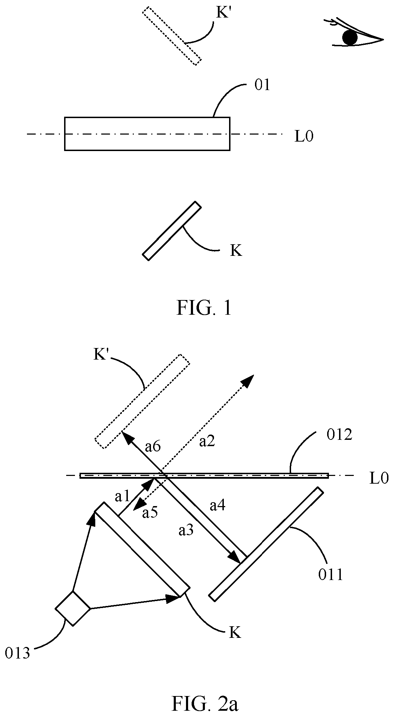

Floating display is a new display manner that can show breathtaking floating display effect in science fiction movies. FIG. 1 shows a common structure for implementing floating display. A group of optical elements are used as a floating optical device 01 to image a light source image K in air without a medium, and a formed image is referred to as a floating image K'. The floating image is K', there is no obstacle between the floating image and a viewer, and the viewer may interact with the floating image K'. Herein, a physical position of the viewer may overlap a physical position of the floating image. A plane L0 on which the floating optical device 01 is located is used as a symmetry axis, and the floating image K' and the light source image K are symmetrically distributed.

A relatively high light loss exists during floating imaging of a floating display device in a conventional display technology, affecting imaging effect of floating display.

### SUMMARY

This application provides a floating optical device, an optical module, and an optical system, so that a relatively low light loss exists during floating imaging, and imaging effect of floating display can be optimized.

According to a first aspect, this application provides a floating optical device that may be configured to perform floating display. The floating optical device includes a focusing layer, a transmission layer, and a convergence layer that are sequentially stacked in a direction of an optical axis. The optical axis is an optical axis of the floating optical device. With reference to a direction of light rays, the transmission layer has an incident surface and an emergent surface. The focusing layer is disposed on a side of the incident surface of the transmission layer, and is configured to concentrate incident light rays to the incident surface of the transmission layer. After the light rays enter the transmission layer from the incident surface, the transmission layer needs to modulate and export the light rays to the emergent surface. The convergence layer is disposed on a side of the emergent surface of the transmission layer, and is configured to export light rays exiting the emergent surface of the transmission layer as emergent light rays. During light ray transmission, the focusing layer, the transmission layer, and the convergence layer cooperate to make the incident light ray and the emergent light ray symmetric with respect to the transmission layer. To achieve this effect, the focusing layer includes a plurality of focusing units, and the plurality of focusing units are periodically arrayed in a direction perpendicular to the optical axis. Correspondingly, the convergence layer includes a plurality of convergence units, and the plurality of convergence units are periodically arrayed in the direction perpendicular to the optical axis. The plurality of focusing units and the plurality of convergence unit are in a one-to-one correspondence. In a group including a focusing unit and a convergence unit that correspond to each other, the focusing unit may focus light rays from a same pixel in incident light rays to a same incident concentration point on the incident surface of the transmission layer. The light rays from the same pixel are incident to the focusing unit, and correspond to one incident concentration point. When light rays of a light source image are in a plurality of directions, there are a plurality of incident concentration points on the incident surface. The transmission layer may modulate the light rays of the incident concentration point on the incident surface into light rays of an emergent concentration point on an emergent surface in a one-to-one correspondence. Each incident concentration point corresponds to one emergent concentration point. Light rays of the emergent concentration point on the emergent surface enter the convergence unit, and the convergence unit may converge light rays of a same emergent concentration point into emergent light rays. Each emergent concentration point corresponds to a group of emergent light rays. A first included angle is formed between the incident light ray and the incident surface of the transmission layer, where the first included angle is an acute angle. A second included angle is formed between the emergent light ray and the emergent surface of the transmission layer, where the second included angle is also an acute angle. An opening of the first included angle and an opening of the second included angle face a same side of the optical axis. Values of the first included angle and the second included angle are equal to each other.

During application, the focusing layer may concentrate the incident light rays to the incident surface of the transmission layer, and the convergence layer may converge and emit the light rays on the emergent surface of the transmission layer, and finally image the light source image as a floating image in a symmetric manner with respect to the transmission layer. The light source image is formed by a plurality of pixels, and light rays emitted by any pixel of the light source image may be incident to a plurality of focusing units as incident light rays. The incident light rays and the emergent light rays that respectively correspond to the focusing unit and the convergence unit that correspond to each other may be symmetric with respect to the transmission layer, so that light rays exiting the plurality of convergence units can form one pixel of the floating image. Finally, the plurality of pixels may form the floating image, to ensure that the floating image is the same as the light source image. During entire light ray transmission, there is almost no other loss except a light loss caused by a transmittance of a device material. Therefore, the light loss can be controlled, provided that a high transmittance of a device is ensured. This improves light efficiency of floating imaging, and optimizes and improves display effect of the floating image.

The plurality of focusing units and the plurality of convergence units may be disposed to be symmetric with respect to the transmission layer, that is, in the direction of the optical axis of the floating optical device, the plurality of focusing units and the plurality of convergence units are in a one-to-one correspondence. In this case, in each group including a focusing unit and a convergence unit that correspond to each other, an optical center of the focusing unit is aligned with an optical center of the convergence unit in the direction of the optical axis. The incident light rays are processed by the focusing unit, the transmission layer, and the convergence unit, to form the emergent light rays. The emergent light rays and the incident light rays are symmetric with respect to the transmission layer.

Possibly, in the focusing unit and the convergence unit that correspond to each other, a distance between the transmission layer and the focusing unit is equal to a distance between the transmission layer and the convergence unit, that is, the focusing unit and the convergence unit are symmetric with respect to the transmission layer. This symmetric structure helps implement floating display.

The transmission layer is located between a 1x focal length and a 2x focal length of the focusing unit, and the transmission layer is located between a 1x focal length and a 2x focal length of the convergence unit. A position of the transmission layer relative to the focusing unit is limited, to ensure that the focusing unit can concentrate the light rays from the same pixel in the incident light rays to the same incident concentration point on the incident surface of the transmission layer. A position of the transmission layer relative to the convergence unit is limited, to ensure that the convergence unit can converge the light rays of the same emergent concentration point on the emergent surface of the transmission layer and export the light rays as a group of emergent light rays. The emergent light rays and the incident light rays are symmetric with respect to the transmission layer. Herein, the focusing unit and the convergence unit may be of a same structure, a same material, or both a same structure and a same material.

In some possible implementations, an array period of the plurality of focusing units is the same as an array period of the plurality of convergence units. Possibly, both the array period of the plurality of focusing units and the array period of the plurality of convergence units range from 0.3 mm to 1 mm. A distance between optical axes of any two adjacent focusing units is the array period of the focusing units. A distance between optical axes of any two adjacent convergence units is the array period of the convergence units.

In some possible implementations, the transmission layer includes a plurality of transmission units, the plurality of transmission units are periodically arrayed in the direction perpendicular to the optical axis, and the plurality of transmission units and the plurality of focusing units are in a one-to-one correspondence. In this case, the plurality of transmission units and the plurality of convergence units are also in a one-to-one correspondence. In the focusing unit, the transmission unit, and the convergence unit that correspond to each other, the focusing unit is configured to modulate incident light rays, to concentrate incident light rays emitted by a same pixel to a same incident concentration point on an incident surface of the transmission unit; the transmission unit may modulate light rays of the incident concentration point into light rays of an emergent concentration point on an emergent surface of the transmission unit in a one-to-one correspondence; and the convergence unit is configured to modulate the light rays of the emergent concentration point, to converge light rays of a same emergent concentration point into emergent light rays. The incident light rays and the emergent light rays are symmetric with respect to the transmission units. This structure design can further perform precise modulation on the incident light rays, so that the floating image is imaged more precisely, and occurrence of stray light and interference light is reduced.

The transmission unit may be a first optical structure having a beam deflection function. The first optical structure may include any one or a combination of the following: an aspherical optical element, a metasurface optical element, and a diffractive optical element. When the first optical structure is a metasurface optical element or a diffractive optical element, the first optical structure includes a first substrate, and a first micro-nano structure disposed on the first substrate.

Both the focusing unit and the convergence unit are second optical structures having a focusing imaging function. The second optical structure may specifically include any one or a combination of at least two of the following: a spherical optical element, an aspherical optical element, a metasurface optical element, and a diffractive optical element. When the second optical structure is a metasurface optical element or a diffractive optical element, the second optical structure includes a second substrate and a second micro-nano structure disposed on the second substrate.

Both the first micro-nano structure and the second micro-nano structure are micro-nano structures. The micro-nano structure herein includes at least two types of transparent media with different refractive indexes, and may modulate a light ray, to achieve effect of light ray refraction.

In some possible implementations, the floating optical device may further include a stop. The stop may be specifically disposed between the focusing layer and the transmission layer; between the transmission layer and the convergence layer; on a side that is of the focusing layer and that is away from the transmission layer; or on a side that is of the convergence layer and that is away from the transmission layer. The stop is configured to control an amount of incident light and an aberration of imaging of the floating optical device.

According to a second aspect, this application further provides an optical module. The optical module includes a support member and any one of the foregoing floating optical devices. The support member can provide support for the floating optical device, so that a focusing layer, a transmission layer, and a convergence layer in the floating optical device are sequentially stacked in a direction of an optical axis of the device. Certainly, the support member does not affect light ray incidence and emission of the floating optical device.

According to a third aspect, this application further provides an optical system. The optical system may include a light source image generator and any one of the foregoing floating optical devices. The light source image generator is specifically disposed on a side that is of a focusing layer and that is away from a transmission layer. The light source image generator may generate a light source image. The focusing layer, a transmission layer, and a convergence layer of the floating optical device may process light rays emitted by the light source image, and finally image the light source image as a floating image on a side that is of the convergence layer and that is away from the transmission layer. The floating image and the light source image are symmetric with respect to the transmission layer. The light source image generator is a 2D image display or a 3D image display.

### BRIEF DESCRIPTION OF DRAWINGS

FIG. 1 is a diagram of a principle of floating display in a conventional technology;
FIG. 2a is a diagram of a structure of a floating optical system in a conventional technology;
FIG. 2b is a diagram of a principle of an optical splitter in the floating optical system in the conventional technology;
FIG. 2c is a diagram of a structure and a principle of a retroreflector in the floating optical system in the conventional technology;
FIG. 3a is a diagram of a structure of a floating optical system in a conventional technology;
FIG. 3b is a diagram of a dihedral corner reflector structure of the floating optical system in the conventional technology;
FIG. 3c is a diagram of a principle of a dihedral corner reflector array of the floating optical system in the conventional technology;
FIG. 4a and FIG. 4b are diagrams of structures of a floating optical device according to an embodiment of this application;
FIG. 5a is a diagram of a structure of a floating optical device according to an embodiment of this application;
FIG. 5b is a diagram of a structure of a second optical structure in the floating optical device according to an embodiment of this application;
FIG. 6a and FIG. 6b are optical path diagrams of a group of unit structures in a floating optical device according to an embodiment of this application;
FIG. 7 is an optical path diagram of a floating optical device according to an embodiment of this application;
FIG. 8a and FIG. 8b are optical path diagrams of a floating optical device according to an embodiment of this application;
FIG. 9a to FIG. 9c are optical path diagrams of a floating optical device according to an embodiment of this application;
FIG. 10 is a diagram of a structure of a floating optical device according to an embodiment of this application;
FIG. 11 is an optical path diagram of a floating optical device according to an embodiment of this application;
FIG. 12 is a diagram of a structure of a first optical structure in a floating optical device according to an embodiment of this application;
FIG. 13a is a diagram of a structure of a floating optical device according to an embodiment of this application;
FIG. 13b is an optical path diagram of the floating optical device according to an embodiment of this application;
FIG. 14a to FIG. 14d are diagrams of structures of a floating optical device according to an embodiment of this application;
FIG. 15a is a diagram of a structure of an optical module according to an embodiment of this application;
FIG. 15b is a diagram of a cross-sectional structure of the optical module according to an embodiment of this application; and
FIG. 16a and FIG. 16b are diagrams of structures of an optical system according to an embodiment of this application.

### DESCRIPTION OF EMBODIMENTS

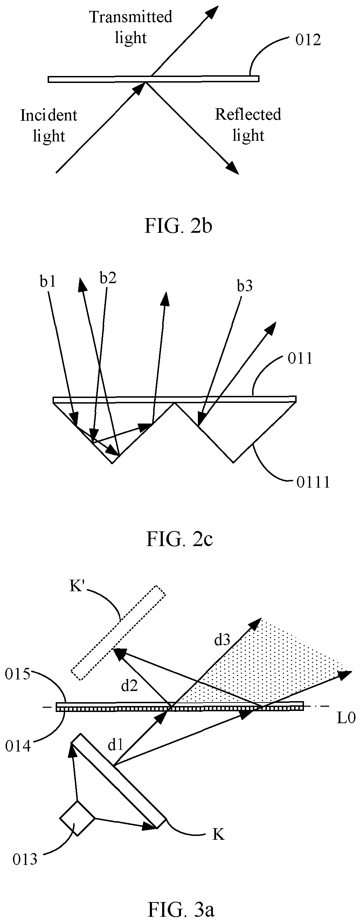

Floating display technologies can be used to perform imaging in air, allowing a viewer to see an image floating in the air. Refer to FIG. 1. Light rays emitted by a light source image K are processed by a floating optical device, to form a floating image K'. A ratio of light energy of the finally formed floating image K' to light energy of the light source image K is light efficiency of the floating optical device. In a floating optical system in FIG. 2a, a floating optical device for implementing floating display includes a retroreflector 011 and an optical splitter 012. The optical splitter 012 is located on a plane L0, and a light source image K and the retroreflector 011 are disposed on a same side of the optical splitter 012. Refer to FIG. 2b. The optical splitter 012 is an optical half mirror, and may transmit a half of incident light and reflect a half of the incident light. The retroreflector 011 has a microstructure array 0111. The microstructure array 0111 may be specifically a micro-angular reflector (as shown in FIG. 2c), or a micro-spherical reflector (not shown herein). In FIG. 2c, the microstructure array 0111 can reflect a portion of incident light (for example, a light ray b1, and a light ray b2) twice, so that emergent light and the incident light are parallel to each other and in opposite directions; and another portion of incident light (for example, a light ray b3) is lost in reflection performed by the microstructure array 0111 once. Refer to FIG. 2a, FIG. 2b, and FIG. 2c. A light source image generator 013 generates the light source image K within a specific angle-of-view range, a light ray a1 forming the light source image K is first incident to the optical splitter 012, a half of the light ray, namely, a2 is transmitted and lost, and the other half of the light ray, namely, a3 is reflected by the optical splitter to the retroreflector 011. The microstructure array 0111 on the retroreflector 011 modulates each beam of incident light rays, so that an emergent direction of the modulated beam is the same as an incident direction. A light ray a4 passing through the retroreflector 011 passes through the optical splitter 012 again, a half of the light ray, namely, a5 is reflected and lost, and the other half of the light ray, namely, a6 is transmitted to form a floating image K', which is seen by a viewer. The virtual image K' and the light source image K are symmetric with respect to the plane L0 on which the optical splitter 012 is located. It can be learned from an optical path principle shown in FIG. 2a that the light ray needs to pass through the optical splitter 012 twice, and a half of energy is lost each time, and an energy loss also exists when the retroreflector 011 modulates the beam. Assuming that the light energy of the light source image K is 100%, light energy is 50% after the light ray passes through the optical splitter 012. Assuming that a reflectivity of the retroreflector 011 reaches 97%, remaining light energy after reflection by the retroreflector 011 is 50%×97%×97%≈47%. After the light ray passes through the optical splitter 012 again, remaining light energy of the floating image K' is 47%×50%=23.5%. It can be learned that, when the floating optical device in FIG. 2a performs floating display, the light energy is almost 80% lost, and total light efficiency is only about 20%.

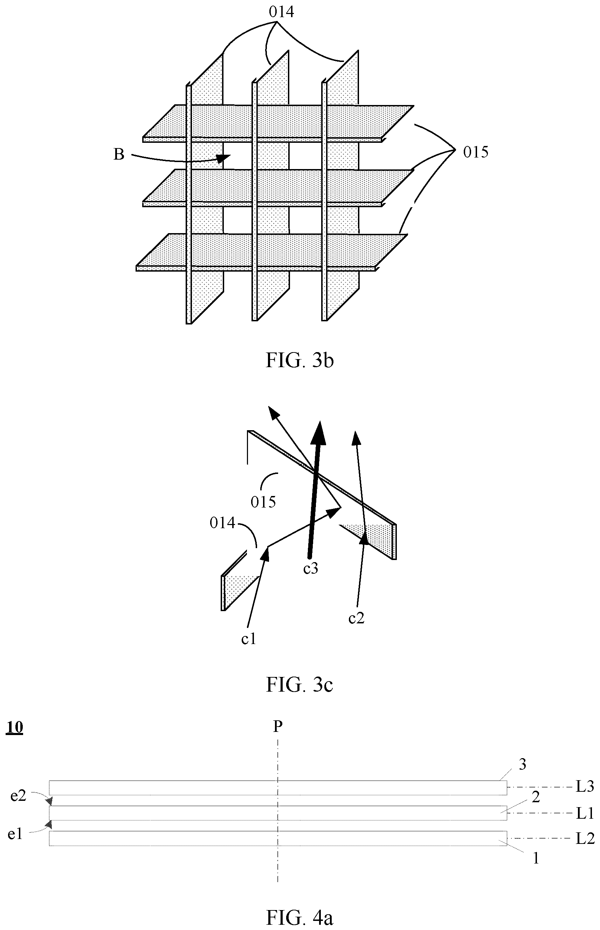

In another floating optical system shown in FIG. 3c, a floating optical device for implementing floating display includes a dihedral corner reflector array (dihedral corner reflector array, DCRA). Refer to FIG. 3b. The dihedral corner reflector array specifically includes a first reflector array 014 and a second reflector array 015 that are arranged orthogonally. The first reflector array 014 and the second reflector array 015 may form numerous square micro-reflectors (square micro-reflectors, SMRs) B. An inner wall of each micro-reflector B is coated with a reflective material. As shown in FIG. 3c, the inner wall of the micro-reflector B may reflect a light ray c1 twice, so that an emergent light ray and an incident light ray are symmetric in a direction. A light ray c2 is reflected once or a plurality of times to form stray light. A light ray c3 is lost when passing through a gap of the micro-reflector B. Refer to FIG. 3a and FIG. 3c. A light source image generator 013 generates a light source image K within a specific angle-of-view range, a light ray b1 emitted by a light source image K is incident to the dihedral corner reflector array, a portion of the light ray d1 is emitted twice in the dihedral corner reflector array (shown as the light ray c1 in FIG. 3c), and an emergent light ray d2 and the incident light ray b1 are exactly symmetric in a direction. A portion of the incident light ray, namely, d3 directly passes through the hollow micro-reflector B and is lost (shown as the light ray c3 in FIG. 3c), and the remaining light ray is reflected once (shown as the light ray c2 in FIG. 3c) or a plurality of times in the dihedral corner reflector array, to form a ghost image or stray light. The ghost image and the stray light interfere with the floating image K'. A manufacturing process of the floating optical device is complex, and has more light losses. It is assumed that light energy of the light source image K is 100%, and light rays pass through the dihedral corner reflector array. Because the SMR is hollow, assuming that at least 40% of light rays directly pass through the SMR and are lost, remaining light rays are 60%. Assuming that 20% of the light rays can be reflected only once and a plurality of times, to form a ghost image and stray light, remaining light rays are 60%-20%=40%. Assuming that a reflectivity of the dihedral corner reflector array reaches 97% each time, remaining light energy of the obtained floating image K' is only 40%×97%×97%≈37%. It can be learned that, when the floating optical device in FIG. 3a performs floating display, a light energy loss exceeds 60%, and total light efficiency is less than 40%.

It can be learned that, a light loss is serious, and light efficiency is extremely low, during imaging of the floating optical device in a conventional technology, floating imaging is not facilitated. Consequently, brightness, definition, and contrast of the floating image are relatively low, and these defects also make it difficult to expand application of floating display technologies. Therefore, an embodiment of this application provides a floating optical device, to improve optical efficiency of floating display.

To make the objectives, technical solutions, and advantages of this application clearer, the following further describes this application in detail with reference to the accompanying drawings.

Terms used in the following embodiments are merely intended to describe specific embodiments, but are not intended to limit this application. The terms "one", "a" and "this" of singular forms used in this specification and the appended claims of this application are also intended to include expressions such as "one or more", unless otherwise specified in the context clearly.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

Refer to FIG. 4a. An embodiment of this application provides a floating optical device 10. The floating optical device 10 may be configured to perform floating display. The floating optical device 10 has an optical axis P, and a direction of an optical axis of the floating optical device 10 is a direction of the optical axis P. In the direction of the optical axis P, the floating optical device 10 includes a focusing layer 1, a transmission layer 2, and a convergence layer 3 that are sequentially stacked. Based on an incident direction of a light ray and an emergent direction of a light ray during application, the transmission layer 2 has an incident surface e1 and an emergent surface e2. That is, for the transmission layer 2, a light ray enters the transmission layer 2 from the incident surface e1, and exits the transmission layer 2 from the emergent surface e2. It is assumed that a plane on which the transmission layer 2 is located is a first plane L1. The focusing layer 1 is located on a side of the incident surface e1 of the transmission layer 2, and a plane on which the focusing layer 1 is located is a second plane L2. The convergence layer 3 is located on a side of the emergent surface e2 of the transmission layer 2, and a plane on which the convergence layer 3 is located is a third plane L3. The first plane L1, the second plane L2, and the third plane L3 are all perpendicular to the optical axis P. During application, the focusing layer 1 may concentrate incident light rays to the incident surface e1 of the transmission layer 2, and the convergence layer 3 may converge and emit light rays exiting the emergent surface e2 of the transmission layer 2, and finally image a light source image as a floating image on a side that is of the convergence layer 3 and that is away from the transmission layer 2.

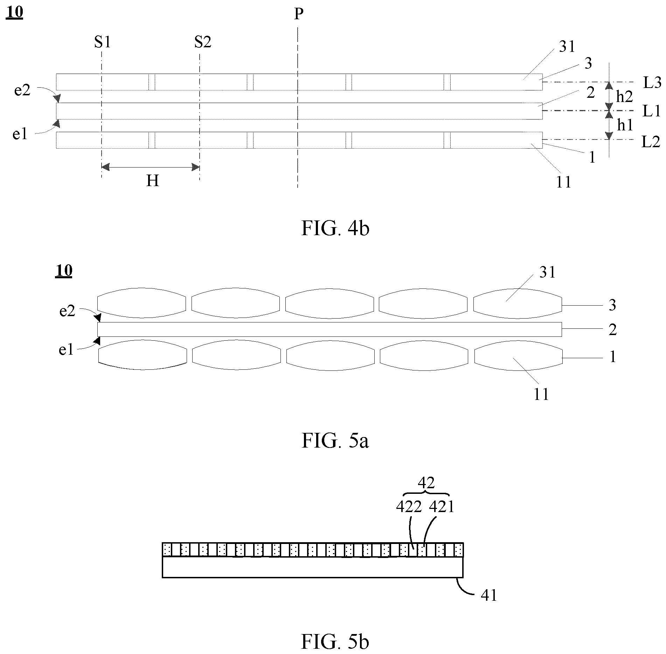

Refer to FIG. 4b. The focusing layer 1 includes a plurality of focusing units 11, the plurality of focusing units 11 are periodically arrayed in a direction perpendicular to the optical axis, and a plane on which each focusing unit 11 is located is the second plane L2. The convergence layer 3 includes a plurality of convergence units 31. The plurality of convergence units 31 are periodically arrayed in the direction perpendicular to the optical axis, and a plane on which each convergence unit 31 is located is the third plane L3. In the direction of the optical axis, the plurality of focusing units 11 and the plurality of convergence units 31 are in a one-to-one correspondence. Between a focusing unit 11 and a convergence unit 31 that correspond to each other, a connection line between an optical center of the focusing unit 11 and an optical center of the convergence unit 31 is perpendicular to the plane on which the transmission layer 2 is located, that is, an optical axis of the focusing unit 11 and an optical axis of the convergence unit 31 are collinear. In FIG. 4b, five focusing units 11 are shown for the focusing layer 1, and correspondingly, five convergence units 31 are shown for the convergence layer 3. It should be understood that each focusing unit 11 has an optical axis, each convergence unit 31 also has an optical axis, an optical axis of any focusing unit 11 is parallel to the optical axis P of the floating optical device 10, and an optical axis of any convergence unit is also parallel to the optical axis P of the floating optical device 10. In addition, in the focusing unit 11 and the convergence unit 31 that correspond to each other, an optical axis of the focusing unit 11 and an optical axis of the convergence unit 31 coincide. The focusing unit 11 may focus the incident light rays to the incident surface e1 of the transmission layer 2, and the convergence unit 31 may converge the light rays from the emergent surface e2 of the transmission layer 2 and emit the light rays as emergent light rays. The emergent light rays and the incident light rays are symmetric with respect to the transmission layer 2.

Refer to FIG. 4a and FIG. 4b. The focusing layer 1 and the convergence layer 3 are disposed symmetric with respect to the transmission layer 2. It is assumed that a distance between the plane L1 on which the transmission layer 2 is located and the plane L2 on which the focusing layer 1 is located is h1, a distance between the plane L1 on which the transmission layer 2 is located and the plane L3 on which the convergence layer 3 is located is h2, and h1 is equal to h2. The transmission layer 2 is disposed between a 1x focal length and a 2x focal length of the focusing unit 11, and the transmission layer 2 is disposed between a 1x focal length and a 2x focal length of the convergence unit 31. For example, the transmission layer 2 is located at the 1x focal length of the focusing unit 11, and the transmission layer 2 is disposed at the 1x focal length of the convergence unit 31.

As shown in FIG. 4b, array periods of the focusing unit 11 and the convergence unit 31 may be set to be the same, and a range of the array periods may range from 0.3 mm to 1 mm. The focusing unit 11 is used as an example. A distance between optical axes of any two adjacent focusing units 11 is an array period of the focusing units 11. It may be inferred that a distance between optical axes of any two adjacent convergence units 31 is an array period of the convergence units 31. In FIG. 4b, two groups including focusing units 11 and convergence units 31 that correspond to each other are used as an example for description. In a first group including a focusing unit 11 and a convergence unit 31 that correspond to each other, an optical axis of the focusing unit 11 and an optical axis of the convergence unit 31 are collinear, and are denoted as an optical axis S1. In a second group including a focusing unit 11 and a convergence unit 31 that correspond to each other, an optical axis of the focusing unit 11 and an optical axis of the convergence unit 31 are collinear, and are denoted as an optical axis S2. The optical axis S1 and the optical axis S2 are separately parallel to the optical axis P of the floating optical device 10, and a distance between the optical axis S1 and the optical axis S2 is an array period H. That is, array periods of the focusing unit 11 and the convergence unit 31 are both H, and a value range of H ranges from 0.3 mm to 1 mm. For example, the array period may be 0.4 mm, 0.6 mm, or 0.9 mm.

Both the focusing unit 11 and the convergence unit 31 are first optical structures having a focusing imaging function. For example, if the first optical structure is a microlens, the focusing layer 1 is equivalent to a microlens array, and the convergence layer 3 is also a microlens array. Specifically, the first optical structure may be any one or a combination of at least two of the following: a spherical optical element, an aspherical optical element, a metasurface optical element, and a diffractive optical element. As shown in FIG. 5a, both the focusing unit 11 and the convergence unit 31 are spherical optical elements. A spherical optical element is relatively mature in production technologies and is applied in various technical fields of industry and scientific research. For other surface optical elements, large-scale mass production may also be implemented by using a semiconductor process or a nano-imprinting process. Therefore, processing of the focusing unit 11 and the convergence unit 31 is relatively easy to implement. This helps reduce implementation costs.

To achieve relatively good light transmission effect, the focusing unit 11 and the convergence unit 31 preferably use a material with a relatively high light transmission rate, for example, photoresist. The focusing unit 11 and the convergence unit 31 may be of a same structure, a same material, or both a same structure and a same material.

In a specific implementation, when the second optical structure is a metasurface optical element or a diffractive optical element, as shown in FIG. 5b, the second optical structure includes a second substrate 41, and a second micro-nano structure 42 disposed on the second substrate 41. The second substrate 41 may be specifically an inorganic transparent material (for example, silicon dioxide or silicon carbide), or an organic material (for example, polymethyl methacrylate or photoresist). The second micro-nano structure 42 herein includes at least two types of transparent media with different refractive indexes. A first medium 421 and a second medium 422 are used as examples herein. For example, the first medium 421 is polymethyl methacrylate (polymethyl methacrylate, PMMA), and the second medium 422 is air. The first micro-nano structure 42 has a size with a micrometer or nano-scale size feature, and is arranged in an array in a specific manner. A metasurface structure is used as an example. The second micro-nano structure 42 is a sub-wavelength unit. A distance between any two points on a cross section of each second micro-nano structure 42 along a horizontal plane on which the second substrate 41 is located is less than a wavelength of an incident light ray. In addition, a distance between any two adjacent second micro-nano structures 42 is less than the wavelength of the incident light ray, so that the second micro-nano structure 42 can perform phase modulation on the incident light ray, to achieve effect of optical path refraction.

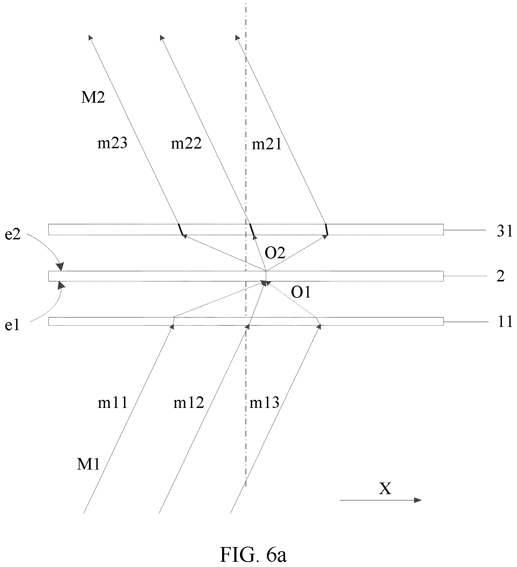

A group including a focusing unit 11 and a convergence unit 31 that correspond to each other is used as an example. The focusing unit 11, the convergence unit 31, and the transmission layer 2 that correspond to each other are set as a group of unit structures. Because the focusing unit 11 is sufficiently small, a pixel is sufficiently far away from the focusing unit 11, and incident light rays M1 that can be incident to the focusing unit 11 in light rays emitted by the pixel are approximately parallel. As shown in FIG. 6a, a beam of light rays from a same pixel (for ease of illustration, the light rays from the same pixel herein are, for example, parallel to each other) is used as the incident light rays M1, and is incident from a side of the focusing unit 11. The focusing unit 11 modulates the incident light rays M1, to concentrate the incident light rays M1 to a same incident concentration point O1 on the incident surface e1 of the transmission layer 2, and then the incident light rays enter the transmission layer 2 from the incident concentration point O1. The transmission layer 2 modulates the light rays of the incident concentration point O1, to modulate the light rays to an emergent concentration point O2 on the emergent surface e2 of the transmission layer 2. After exiting the emergent concentration point O2, the light rays diverge and enter the convergence unit 31, and the convergence unit 31 modulates the light rays exiting the emergent concentration point O2, so that light rays can exit the convergence unit 31 in a state in which the light rays are approximately parallel to each other. The light rays exiting the convergence unit 31 are emergent light rays M2, and the emergent light rays M2 and the incident light rays M1 are symmetric with respect to the transmission layer 2.

Specifically, still refer to FIG. 6a. In an X direction, the incident light rays M1 include a light ray m11, a light ray m12, and a light ray m13. After passing through the focusing unit 11, the transmission layer 2, and the convergence unit 31, the light ray m11 is emitted as a light ray m21. After passing through the focusing unit 11, the transmission layer 2, and the convergence unit 31, the light ray m12 is emitted as a light ray m22. After passing through the focusing unit 11, the transmission layer 2, and the convergence unit 31, the light ray m13 is emitted as a light ray m23. The light ray m21, the light ray m22, and the light ray m23 form emergent light rays M2, and the light ray m23, the light ray m22, and the light ray m21 are sequentially arranged. In other words, for one focusing unit 11, a group of parallel incident light rays form emergent light rays after passing through the focusing unit 11, the transmission layer 2, and the convergence unit 31, and a direction of the emergent light rays and a direction of the incident light rays are symmetric with respect to the transmission layer 2. In the X direction, the incident light rays M1 include the light ray m11, the light ray m12, and the light ray m13, and the emergent light rays M2 including the light ray m23, the light ray m22, and the light ray m21. A marking sequence of the incident light rays M1 is opposite to a marking sequence of the emergent light rays M2 in the X direction. The sequence of the light rays represents information carried by the light rays. Because the focusing unit 11 is sufficiently small, when a pixel size of the light source image is greater than that of the focusing unit 11, information carried by the incident light rays M1 is information of a same pixel. In this case, although the light rays m11, m12, and m13 and the light rays m23, m22, and m21 seem to be spatially discontinuous, and the sequence of the emergent light rays M2 is opposite to the sequence of the incident light rays M1, from a perspective of a light wave and a perspective of carrying same information, information of the incident light rays M1 and the emergent light rays M2 is completely the same, and image information reversal does not occur. When the pixel size of the light source image is less than that of the focusing unit 11, the sequence of the emergent light rays M2 is opposite to the sequence of the incident light rays M1, but there is no significant impact on a reversed pixel from a macro perspective, or a light source generator performs pixel reversal processing on the light source image in advance, to avoid reversal of emergent information content. In conclusion, in this embodiment of this application, both the focusing units 11 that are periodically arrayed and the convergence units 31 that are periodically arrayed can image, based on the transmission layer 2, information of a same pixel to a same pixel of the floating image in a symmetric manner with respect to the transmission layer 2, to achieve floating imaging effect.

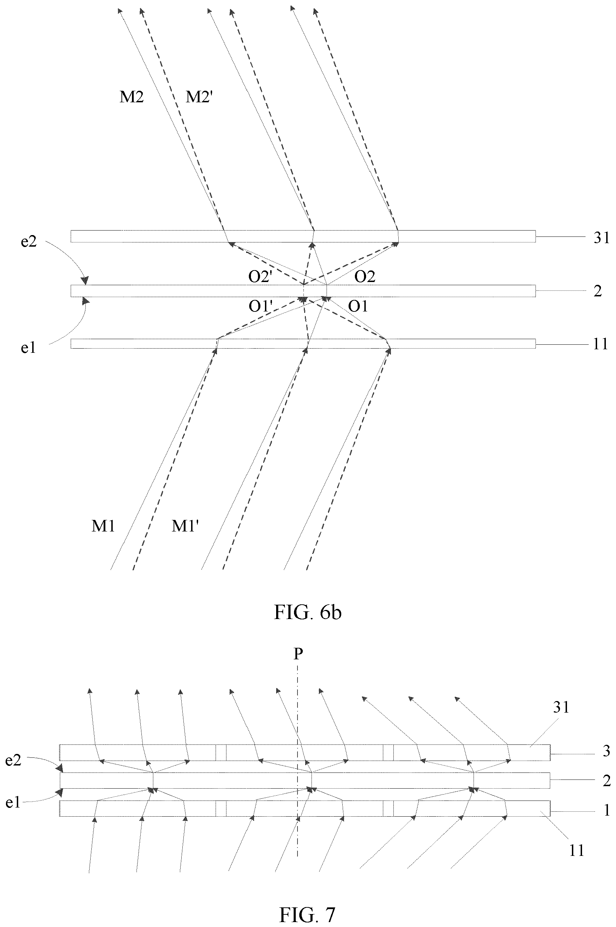

It is assumed the incident light rays include light rays in a plurality of directions, as shown in FIG. 6b. The incident light rays M1 from one pixel is, for example, a group of parallel light rays, and incident light rays M1' from another pixel is, for example, another group of parallel light rays. Directions of the incident light rays M1 and the incident light rays M1' are different. The incident light rays M1 and the incident light rays M1' are incident from a side of the focusing unit 11. The focusing unit 11 modulates the incident light rays M1, to concentrate the incident light rays M1 from one pixel to the same incident concentration point O1 on the incident surface e of the transmission layer 2, and then the incident light rays enter the transmission layer 2 from the incident concentration point O1. The focusing unit 11 modulates the incident light rays M1', to concentrate the incident light rays M1' from the another pixel to the same incident concentration point O1' on the incident surface e of the transmission layer 2, and then the incident light rays enter the transmission layer 2 from the incident concentration point O1. The transmission layer 2 modulates the light rays of the incident concentration point O1, to modulate the light rays to an emergent concentration point O2 on the emergent surface e2 of the transmission layer 2. The transmission layer 2 modulates the light rays of the incident concentration point O1', to concentrate the light rays to an emergent concentration point O2' on the emergent surface e2 of the transmission layer 2. After exiting the emergent concentration point O2, the light rays diverge and enter the convergence unit 31, and the convergence unit 31 modulates the light rays exiting the emergent concentration point O2, so that light rays (namely, the emergent light rays M2) can exit the convergence unit 31 in a state in which the light rays are approximately parallel to each other. The emergent light rays M2 and the incident light rays M1 are symmetric with respect to the transmission layer 2. After exiting the emergent concentration point O2', the light rays diverge and enter the convergence unit 31, and the convergence unit 31 modulates the light rays exiting the emergent concentration point O2', so that light rays (namely, the emergent light rays M2') can exit the convergence unit 31 in a state in which the light rays are approximately parallel to each other. A direction of the emergent light rays M2' and a direction of the incident light rays M1' are symmetric with respect to the transmission layer 2.

Refer to FIG. 6a and FIG. 6b. It can be learned that during light transmission from the incident light ray to the emergent light ray, there is almost no other loss except a light loss caused by a transmittance of each device of the floating optical device 10. In other words, the floating optical device 10 provided in this embodiment of this application has a relatively small light ray loss, and the focusing layer 1, the transmission layer 2, and the convergence layer 3 are all set as materials with a high transmittance, so that optical efficiency of the entire device can be improved. For example, if light transmittances of the focusing layer 1, the transmission layer 2, and the convergence layer 3 are all set to 92%, total light efficiency of the floating optical device 10 is 92%×92%×92%≈78%. Optical efficiency data is significantly improved in this application compared with a conventional technology.

For the entire floating optical device 10, the focusing layer 1 includes the plurality of focusing units 11 that are periodically arrayed, and the convergence layer 3 also includes the plurality of convergence units 31 that are periodically arrayed. As shown in FIG. 7, for each group including a focusing unit 11 and a convergence unit 31 that correspond to each other, it may be considered that each group including the focusing unit 11 and the convergence unit 31 that correspond to each other may process a specific portion of incident light rays into emergent light rays based on the transmission layer 2, and a direction of the emergent light rays and a direction of the incident light rays are symmetric with respect to the transmission layer 2. As long as the focusing unit 11 and the convergence unit 31 are sufficiently small, so that the focusing unit 11 and the convergence unit 31 that correspond to each other may perform floating display on a sufficiently small light ray, for example, a light ray of one point is displayed as one floating point in floating display, from a macro perspective, it may be considered that the emergent light ray and the incident light ray are symmetric with respect to the transmission layer 2.

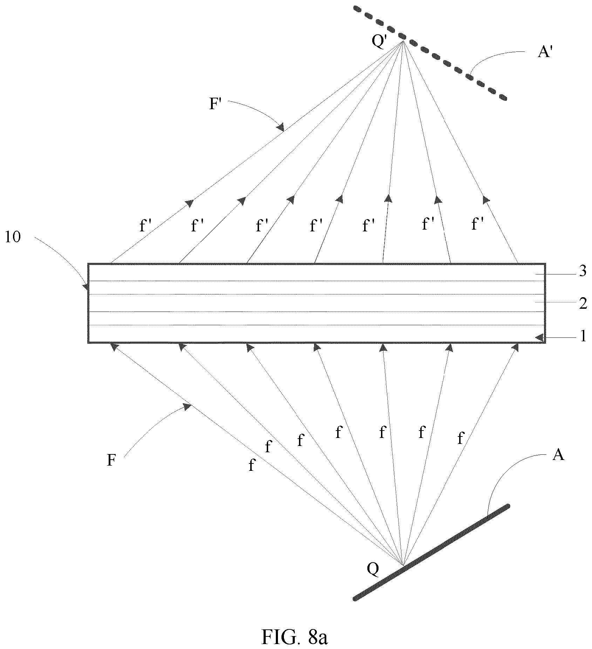

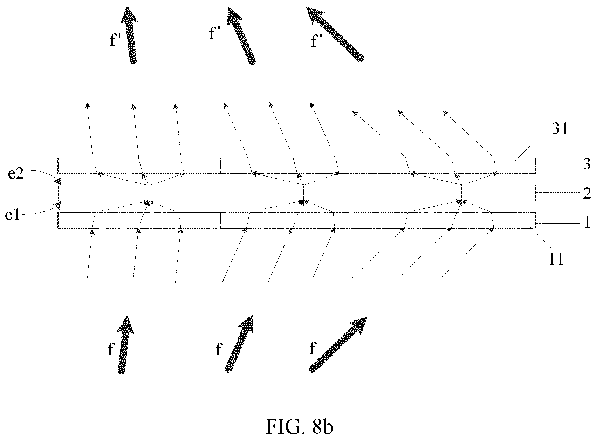

The floating optical device 10 is applied to the floating display. As shown in FIG. 8a, a light source image A is a 2D image, the light source image A is formed by numerous pixels, and each pixel emits a wide beam at a specific angle. For example, a pixel Q of the light source image A emits a wide beam F at an angle shown in the figure. The wide beam F may be considered to be formed by pencil beams f in numerous directions. Each pencil beam f is incident to the floating optical device 10, is successively processed by the focusing layer 1, the transmission layer 2, and the convergence layer 3, and is emitted as a wide beam F' formed by a plurality of pencil beams f'. The wide beam F' is concentrated at a pixel Q' of a floating image A'. The pixel Q' and the pixel Q are symmetric with respect to the transmission layer 2. Specifically, as shown in FIG. 8b, for example, one pencil beam f in the incident light rays corresponds to a group including a focusing unit 11 and a convergence unit 31 that correspond to each other. For example, one pencil beam f corresponds to a group of light rays that are approximately parallel to each other. In each group including a pencil beam f, a focusing unit 11, and a convergence unit 31 that correspond to each other, light rays of the pencil beam f are first concentrated by the focusing unit 11 to a same incident concentration point (not shown herein) on the incident surface e1 of the transmission layer 2, and the transmission layer 2 performs specific deflection modulation on the light rays, the light rays are modulated to a same emergent concentration point (not shown herein) on the emergent surface e2 of the transmission layer 2. The light rays exiting the same emergent concentration point are modulated by the convergence unit 31 again, and finally, the light rays exiting the convergence unit 31 are restored to beams that are approximately parallel to each other. These beams may be considered as pencil beams f'. The pencil beam f and the pencil beam f are symmetric with respect to the transmission layer 2. All pencil beams f form the wide beam F shown in FIG. 8a, and are correspondingly concentrated to one point in air, where the point is a floating pixel Q' of the floating image A'. Numerous pixels such as the pixel Q' form the floating image A'.

In FIG. 8a and FIG. 8b, the light source image A is a 2D image, and the floating image A' that is obtained by performing floating imaging by the floating optical device 10 is also a 2D image. Based on the description of the foregoing embodiment, the floating optical device 10 provided in this embodiment of this application may perform floating imaging on any point on the light source image A in a symmetric manner (symmetric with respect to the transmission layer 2) as the floating image A'.

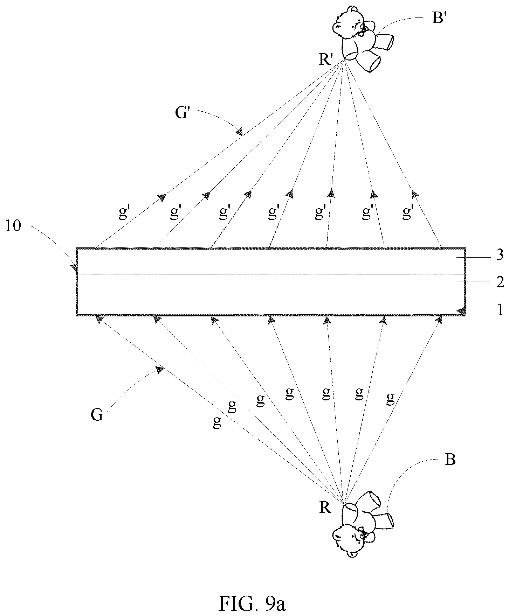

In some embodiments, as shown in FIG. 9a, a light source image B is a 3D image, the light source image B is formed by numerous light source pixels, and each pixel of the light source image B emits a wide beam at a specific angle. For example, a pixel R of the light source image B emits a wide beam G at an angle shown in the figure. The wide beam G may be considered to be formed by pencil beams g in numerous directions. Each pencil beam g is incident to a floating optical device 10, is successively processed by a focusing layer 1, a transmission layer 2, and a convergence layer 3, and is emitted as a wide beam G' formed by a plurality of pencil beams g'. The wide beam G' is concentrated at a pixel R' of a floating image B'. The pixel R' and the pixel R are symmetric with respect to the transmission layer 2. Numerous pixels such as the pixel R' form the floating image B'. For an optical path principle of processing the pencil beam g by the focusing layer 1, the transmission layer 2, and the convergence layer 3, refer to FIG. 8b. Details are not described herein again.

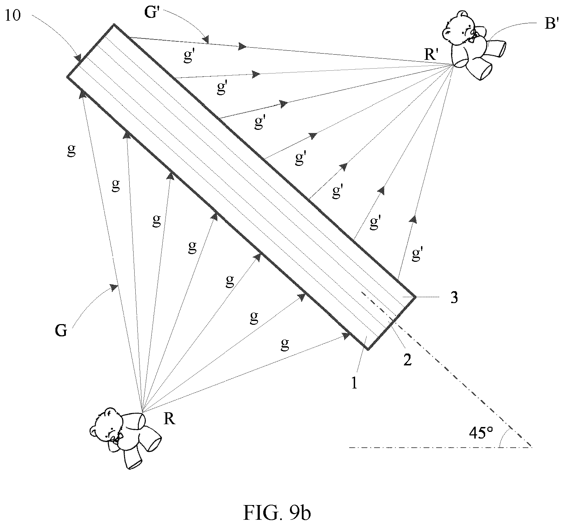

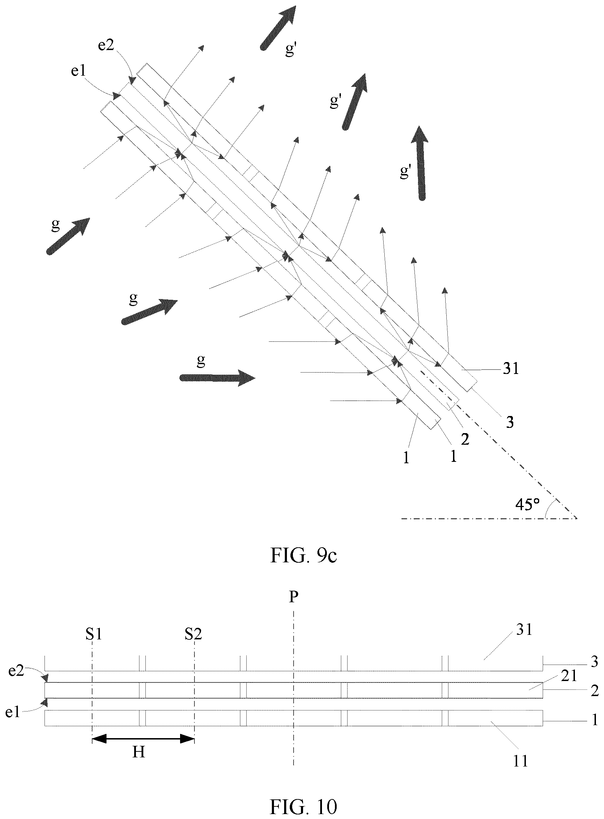

Continue to refer to the floating optical device 10 in FIG. 9b. Compared with the floating optical device 10 shown in FIG. 9a, the floating optical device 10 in FIG. 9b is disposed at an angle of 45° relative to a horizontal plane. For structures of the focusing layer 1, the transmission layer 2, and the convergence layer 3 in the floating optical device 10, refer to FIG. 9a. Details are not described herein again. As shown in FIG. 9c, one pencil beam g in the incident light rays corresponds to a group including a focusing unit 11 and a convergence unit 31 that correspond to each other. For example, one pencil beam g corresponds to a group of light rays that are approximately parallel to each other. In each group including a pencil beam g, a focusing unit 11, and a convergence unit 31 that correspond to each other, light rays of the pencil beam f are first concentrated by the focusing unit 11 to a same incident concentration point (not shown herein) on the incident surface e1 of the transmission layer 2, and the transmission layer 2 performs specific deflection modulation on the light rays, the light rays are modulated to a same emergent concentration point (not shown herein) on the emergent surface e2 of the transmission layer 2. The light rays exiting the same emergent concentration point are modulated by the convergence unit 31 again, and finally, the light rays exiting the convergence unit 31 are restored to beams that are approximately parallel to each other. These beams may be considered as pencil beams g'. The pencil beam g' and the pencil beam g are symmetric with respect to the transmission layer 2. All pencil beams g' form the wide beam F shown in FIG. 9b, and are correspondingly concentrated to one point in air, where the point is a floating pixel R' of the floating image B'. Numerous pixels such as the pixel R' form the floating image B'.

In some embodiments, as shown in FIG. 10, a transmission layer 2 includes a plurality of transmission units 21, the plurality of transmission units 21 are periodically arrayed in a direction perpendicular to an optical axis, and a plane on which each transmission unit 21 is located is a first plane L1 (for the first plane L1, refer to FIG. 4a). In a direction of the optical axis, the plurality of transmission units 21, a plurality of focusing units 11, and a plurality of convergence units 31 are in a one-to-one correspondence. In FIG. 10, five focusing units 11 are shown for a focusing layer 1, five convergence units 31 are shown for a convergence layer 3, and five transmission units 21 are shown for a transmission layer 2. In the direction of the optical axis, one focusing unit 11 corresponds to one convergence unit 31, and one focusing unit 11 also corresponds to one transmission unit 21. It should be understood that each focusing unit 11 has an optical axis, each convergence unit 31 also has an optical axis, and each transmission unit 21 also has an optical axis. An optical axis of any focusing unit 11 is parallel to the optical axis P of the floating optical device 10, an optical axis of any convergence unit 31 is also parallel to the optical axis P of the floating optical device 10, and an optical axis of any transmission unit 21 is also parallel to the optical axis P of the floating optical device 10. In addition, in a focusing unit 11, a transmission unit 21, and a convergence unit 31 that correspond to each other, an optical axis of the focusing unit 11, an optical axis of the transmission unit 21, and an optical axis of the convergence unit 31 coincide. This structure design can further perform refined processing on the incident light rays, so that the floating image is imaged more precisely, and occurrence of stray light and interference light is reduced.

As shown in FIG. 10, array periods of the focusing unit 11, the transmission unit 21, and the convergence unit 31 may be set to be the same, and a range of the array periods may range from 0.3 mm to 1 mm. The focusing unit 11 is used as an example. A distance between optical axes of any two adjacent focusing units 11 is an array period of the focusing units 11. As shown in FIG. 10, two groups including focusing units 11, transmission units 21, and convergence units 31 that correspond to each other are used as an example for description. In a first group including a focusing unit 11, transmission unit 21, and a convergence unit 31 that correspond to each other, an optical axis of the focusing unit 11, an optical axis of the transmission unit 21, and an optical axis of the convergence unit 31 are collinear, and are denoted as an optical axis S1. In a second group including a focusing unit 11, transmission unit 21, and a convergence unit 31 that correspond to each other, an optical axis of the focusing unit 11, an optical axis of the transmission unit 21, and an optical axis of the convergence unit 31 are collinear, and are denoted as an optical axis S2. A distance between the optical axis S1 and the optical axis S2 is an array period H. That is, array periods of the focusing unit 11, the transmission unit 21, and the convergence unit 31 are all H, and a value range of H ranges from 0.3 mm to 1 mm. For example, H is selected to be 0.4 mm, 0.6 mm, or 0.9 mm.

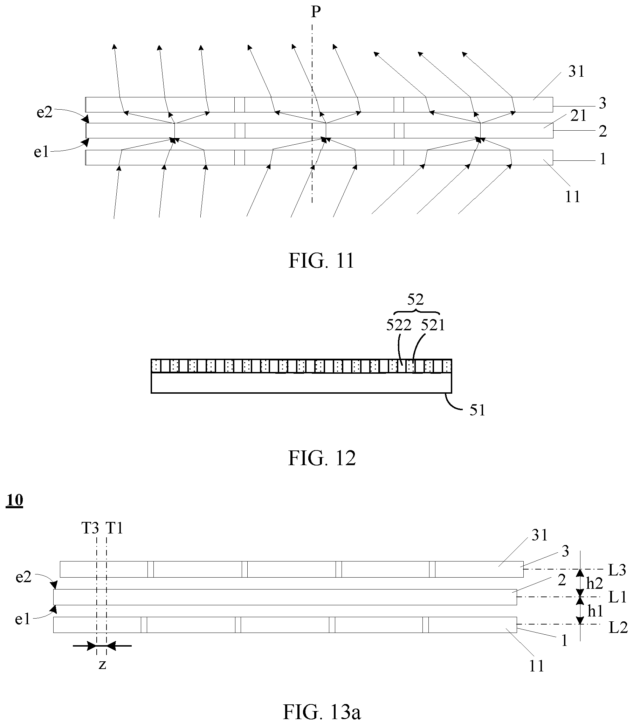

Refer to FIG. 10. The focusing unit 11 may focus the incident light rays to the incident surface e1 of the transmission layer 2, and the convergence unit 31 may converge the light rays from the emergent surface e2 of the transmission layer 2 and emit the light rays as emergent light rays. For an optical path principle, refer to FIG. 11. For each group including a focusing unit 11, a transmission unit 21, and a convergence unit 31 that correspond to each other, it may be considered that each group including the focusing unit 11, the transmission unit 21, and the convergence unit 31 that correspond to each other may process a specific portion of incident light rays into emergent light rays, and a direction of the emergent light rays and a direction of the incident light rays are symmetric with respect to the transmission layer 2. As long as the focusing unit 11, the transmission unit 21, and the convergence unit 31 are sufficiently small, so that the focusing unit 11, the transmission unit 21, and the convergence unit 31 that correspond to each other may perform floating display on a sufficiently small light ray, for example, a light ray of one point is displayed as one floating point in floating display, from a macro perspective, reverse display of the emergent light ray image and the incident light ray image may be ignored, and therefore, it may be considered that the emergent light ray and the incident light ray are symmetric with respect to the transmission layer 2.

The transmission unit 21 is a first optical structure having a beam deflection function. Therefore, the transmission layer 2 is equivalent to a first optical structure array. Specifically, the first optical structure may be any one or a combination of at least two of the following: an aspherical optical element, a metasurface optical element, and a diffractive optical element. When the first optical structure is a metasurface optical element or a diffractive optical element, for the structure of the first optical structure, refer to FIG. 12. The first optical structure includes a first substrate 51, and a first micro-nano structure 52 disposed on the first substrate 51. The first substrate 51 may be specifically an inorganic transparent material (for example, silicon dioxide or silicon carbide), or an organic material (for example, polymethyl methacrylate or photoresist). The first micro-nano structure 52 herein includes at least two types of transparent media with different refractive indexes. A third medium 521 and a fourth medium 522 as examples herein. For example, the third medium 521 is polymethyl methacrylate (polymethyl methacrylate, PMMA), and the fourth medium 522 is air. The first micro-nano structure 52 has a size with a micro-meter or nano-scale size feature, and is arranged in an array in a specific manner. A metasurface structure is used as an example. The first micro-nano structure 52 is a sub-wavelength unit. A distance between any two points on a cross section of each first micro-nano structure 52 along a horizontal plane on which the first substrate 51 is located is less than a wavelength of an incident light ray. In addition, a distance between any two adjacent first micro-nano structures 52 is less than the wavelength of the incident light ray, so that the first micro-nano structure 52 can perform phase modulation on the incident light ray, to achieve effect of optical path refraction.

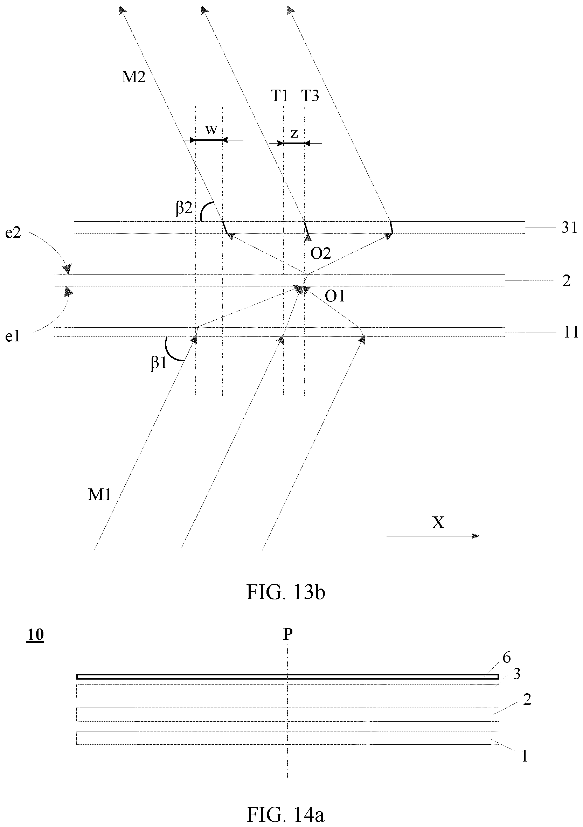

In the foregoing embodiment, the plurality of focusing units 11 and the plurality of convergence units 31 are in a one-to-one correspondence in the direction of the optical axis, and the floating image formed after the incident light rays is processed by the floating optical device 10 and the light source image are symmetric with respect to the transmission layer 2. In some other embodiments, as shown in FIG. 13a, between a focusing unit 11 and a convergence unit 31 that correspond to each other, an optical axis T1 of the focusing unit 11 and an optical axis T3 of the convergence unit 31 may have an offset of z in a direction perpendicular to an optical axis. Correspondingly, for an optical path diagram of incident light rays and emergent light rays, refer to FIG. 13b. A group including a focusing unit 11 and a convergence unit 31 that correspond to each other is used as an example. An optical axis T3 of the convergence unit 31 and an optical axis T1 of the focusing unit 11 have an offset of z in an X direction perpendicular to the optical axis. A beam of light rays from a same pixel (for ease of illustration, the light rays from the same pixel herein are, for example, parallel to each other) is used as incident light rays M1. A first included angle β1 is formed between the incident light rays M1 and a surface that is of a focusing unit 11 and that is away from a transmission layer 2. The first included angle β1 is an acute angle, and an opening of the first included angle β1 faces a left side of a device structure shown in the figure. The incident light rays M1 are incident from a side of the focusing unit 11. The focusing unit 11 modulates the incident light rays M1, to concentrate the incident light rays M1 to a same incident concentration point O1 on an incident surface e1 of the transmission layer 2, and then the incident light rays enter the transmission layer 2 from the incident concentration point O1. The transmission layer 2 modulates the light rays of the incident concentration point O1, to modulate the light rays to an emergent concentration point O2 on the emergent surface e2 of the transmission layer 2. After exiting the emergent concentration point O2, the light rays diverge and enter the convergence unit 31, and the convergence unit 31 modulates the light rays exiting the emergent concentration point O2, so that light rays can exit the convergence unit 31 in a state in which the light rays are approximately parallel to each other. The light rays exiting the convergence unit 31 are emergent light rays M2, and a second included angle β2 is formed between the emergent light rays M2 and a surface that is of the convergence unit 31 and that is away from the transmission layer 2, and the second included angle β2 is also an acute angle. The second included angle B 2 is also an acute angle, and an opening of the second included angle β2 also faces the left side of the device structure shown in the figure. Using an optical axis P as a reference, it may be considered that the opening of the first included angle β1 and the opening of the second included angle β2 face a same side of the optical axis P. In addition, values of the second included angle β2 and the first included angle β1 are equal to each other. The emergent light rays M2 and the incident light rays M1 may have an offset of w in the X direction. Although the incident light rays M1 and the emergent light rays M2 have a specific position offset in a direction of the optical axis, from a perspective of a light wave and a perspective of carrying same information, information of the incident light rays M1 and the emergent light rays M2 is completely the same, and information of a same pixel can be imaged to a same pixel of a floating image, achieving floating imaging effect.

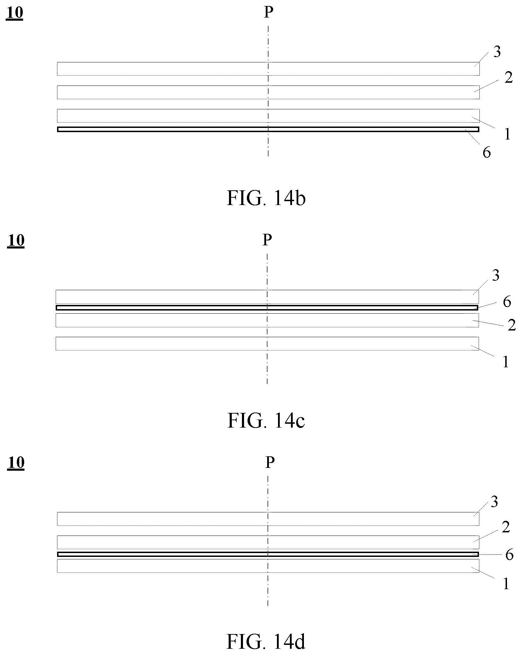

Based on the floating optical device 10 shown in FIG. 4a, as shown in FIG. 14a to FIG. 14d, an embodiment of this application further provides a floating optical device 10 having a stop 6. Specifically, as shown in FIG. 14a, the stop 6 may be disposed on a side that is of a convergence layer 3 and that is away from a transmission layer 2. Alternatively, as shown in FIG. 14b, the stop 6 may be disposed on a side that is of a focusing layer 1 and that is away from the transmission layer 2. Alternatively, as shown in FIG. 14c, the stop 6 may be disposed between the convergence layer 3 and the transmission layer 2. Alternatively, as shown in FIG. 14d, the stop 6 may be disposed between the transmission layer 2 and the focusing layer 1. Due to existence of the stop 6, a light ray passing through the floating optical device 10 may be controlled. In other words, the stop 6 is configured to control an amount of the incident light and an aberration of imaging of the floating optical device 10. A disposing position of the stop 6 does not affect function implementation.

In conclusion, when the floating optical device 10 provided in this embodiment of this application is applied to floating display, light rays emitted by each pixel of a light source image may be incident to different focusing units 11 of the focusing layer 1, and each focusing unit 11 may modulate incident light rays, to concentrate incident light rays from a same pixel to a same incident concentration point on an incident surface e1 of the transmission layer 2. The incident light rays from the same pixel correspond to one incident concentration point. The transmission layer 2 may modulate the light rays of the same incident concentration point on the incident surface e1 to an emergent concentration point on an emergent surface e2. Each convergence unit 31 may modulate the light rays of the emergent concentration point, converge light rays of a same emergent concentration point into emergent light rays that are approximately parallel to each other. Each group of emergent light rays that are approximately parallel to each other corresponds to one emergent concentration point. A periodic array structure of the focusing unit 11 and the periodic array structure of the convergence unit 31 may process light rays of each pixel of light rays emitted by the light source image, so that the emergent light rays and the incident light rays may be symmetric with respect to the transmission layer 2, the emergent light rays form a floating image, and it is ensured that the floating image and the light source image have same information. When a plurality of convergence units 31 and a plurality of focusing units 11 are selected in a one-to-one correspondence along an optical axis, emergent light rays and incident light rays may also be symmetric with respect to the transmission layer 2. During entire light ray transmission, there is almost no other loss except a light loss caused by a transmittance of a device material. Therefore, the light loss can be controlled, provided that a high transmittance of a device is ensured. This improves light efficiency of floating imaging, and optimizes and improves display definition and contrast of the floating image.

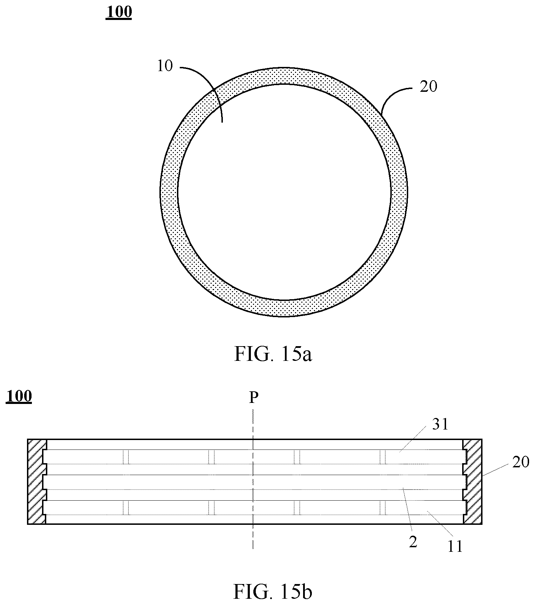

Based on the floating optical device 10, an embodiment of this application further provides an optical module 100. As shown in FIG. 15a, the optical module 100 includes a support member 20 and the floating optical device 10 provided in the foregoing embodiments. For example, the floating optical device 10 herein is round-shaped. The support member 20 is ring-shaped, with a hollow center. The floating optical device 10 is disposed at a hollow position in the middle of the support member 20. In other words, the support member 20 provides support for the floating optical device 10 from a circumferential edge of the floating optical device 10, and a hollow in the middle of the support member 20 does not affect incidence and emission of light rays. FIG. 15b is a diagram of a cross-sectional structure of the optical module 100. Circumferential edges of a focusing layer 1, a transmission layer 2, and a convergence layer 3 in the floating optical device 10 are all fastened to the support member 20, and the focusing layer 1, the transmission layer 2, and the convergence layer 3 are sequentially stacked in a direction of an optical axis P.

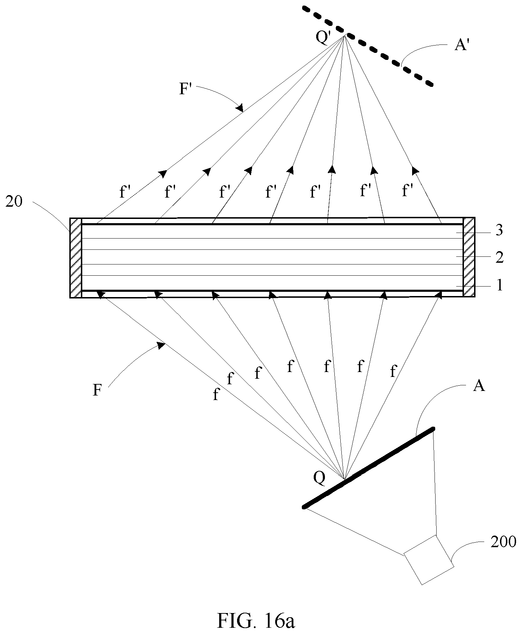

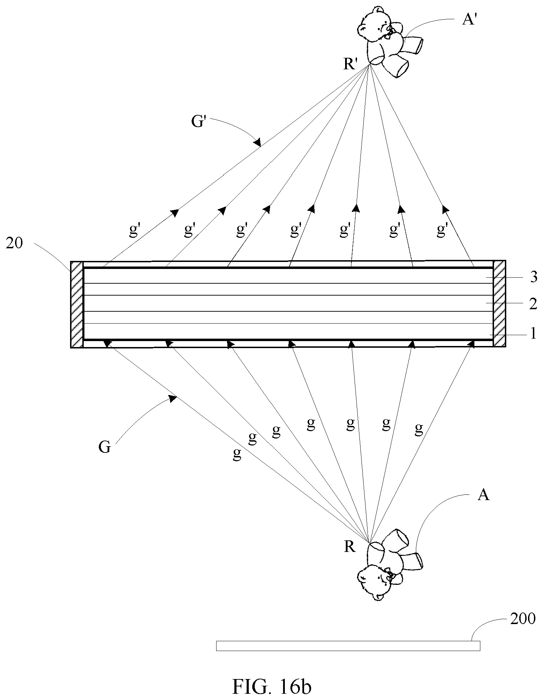

In addition, an embodiment of this application further provides an optical system. As shown in FIG. 16a and FIG. 16b, the optical system includes a light source image generator 200 and any one of the foregoing optical modules 100. The light source image generator 200 is disposed on a side that is of a focusing layer 1 of a floating optical device 10 and that is away from a transmission layer 2 of the floating optical device 10. A light ray emitted by a light source image A generated by the light source image generator may sequentially pass through the focusing layer 1, the transmission layer 2, and a convergence layer 3, to form a floating image. An optical system has many application scenarios, including but not limited to public places such as an elevator, a restaurant, and a bank, and private places such as a private automobile, and a home tabletop. For example, the optical system is applied to a button floating display in a public place, to implement non-contact interaction, and has advantages of being more secure, healthier, and more privacy. The optical system brings more breathtaking, cooler, and more personalized experience when applied to a virtual decoration or an in-car sprite of a private automobile for floating display. When the optical system is applied to a home tabletop for floating display, stereoscopic floating display and a zero-distance interaction operation can increase game experience and fun, and implement a naked-eye virtual and real fusion function.

As shown in FIG. 16a, the light source image generator 200 is a 2D image display, for example, a liquid crystal display (liquid crystal display, LCD), an organic light-emitting diode (organic light-emitting diode, OLED) screen, or a projection screen. A light source image A generated by the light source image generator is a 2D image. The light source image A is formed by numerous pixels, and each pixel emits a wide beam at a specific angle. For example, a pixel Q of the light source image A emits a wide beam F at an angle shown in the figure. The wide beam F may be considered to be formed by pencil beams f in numerous directions. Each pencil beam f is incident to the floating optical device 10, is successively processed by the focusing layer 1, the transmission layer 2, and the convergence layer 3, and is emitted as a wide beam F' formed by a plurality of pencil beams f'. The wide beam F' is concentrated at a pixel Q' of a floating image A'. The pixel Q' and the pixel Q are symmetric with respect to the transmission layer 2. Numerous pixels such as the pixel Q' form the floating image A'. For light ray processing of the numerous pencil beams f by the focusing layer 1, the transmission layer 2, and the convergence layer 3, refer to FIG. 8b. Details are not described herein again.

As shown in FIG. 16a, the light source image generator 200 is a 3D image display, and a light source image B generated by the light source image generator 20 is a 3D image. The light source image B is formed by numerous pixels, and each pixel of the light source image B emits a wide beam at a specific angle. For example, a pixel R of the light source image B emits a wide beam G at an angle shown in the figure. The wide beam G may be considered to be formed by pencil beams g in numerous directions. Each pencil beam g is incident to a floating optical device 10, is successively processed by a focusing layer 1, a transmission layer 2, and a convergence layer 3, and is emitted as a wide beam G' formed by a plurality of pencil beams g'. The wide beam G' is concentrated at a pixel R' of a floating image B'. The pixel R' and the pixel R are symmetric with respect to the transmission layer 2. Numerous pixels such as the pixel R' form the floating image B'. For an optical path principle of processing the pencil beam g by the focusing layer 1, the transmission layer 2, and the convergence layer 3, refer to FIG. 8b. Details are not described herein again.

Because the floating optical device 10 has relatively high optical efficiency, the optical system provided in this embodiment of this application can image, as a floating image through transmission of the floating optical device 10, an image (including a 2D image and a 3D image) produced by the light source image generator, and the floating image has relatively high brightness, definition, and contrast, achieving good floating display effect.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A floating optical device, comprising: a focusing layer, a transmission layer, and a convergence layer that are sequentially stacked in a direction of an optical axis, wherein the transmission layer has an incident surface facing the focusing layer and an emergent surface facing the convergence layer;
the focusing layer comprises a plurality of focusing units, and the plurality of focusing units are periodically arrayed in a direction perpendicular to the optical axis; the convergence layer comprises a plurality of convergence units, and the plurality of convergence units are periodically arrayed in the direction perpendicular to the optical axis; and the plurality of focusing units and the plurality of convergence units are in a one-to-one correspondence;
in the focusing unit and the convergence unit that correspond to each other, the focusing unit is configured to modulate incident light rays, to concentrate incident light rays emitted by a same pixel to a same incident concentration point on the incident surface of the transmission layer; the transmission layer is configured to modulate the light rays of the incident concentration point into light rays of an emergent concentration point on the emergent surface of the transmission layer in a one-to-one correspondence; and the convergence unit is configured to modulate the light rays of the emergent concentration point, to converge light rays of a same emergent concentration point into emergent light rays; and
a first included angle is formed between the incident light ray and the incident surface of the transmission layer, a second included angle is formed between the emergent light ray and the emergent surface of the transmission layer, an opening of the first included angle and an opening of the second included angle face a same side of the optical axis, both the first included angle and the second included angle are acute angles, and values of the first included angle and the second included angle are equal to each other.

2. The floating optical device according to claim 1, wherein the plurality of focusing units and the plurality of convergence units are symmetric with respect to the transmission layer, so that the incident light ray and the emergent light ray are symmetric with respect to the transmission layer.

3. The floating optical device according to claim 1 or 2, wherein the transmission layer comprises a plurality of transmission units, the plurality of transmission units are periodically arrayed in the direction perpendicular to the optical axis, and the plurality of transmission units and the plurality of focusing units are in a one-to-one correspondence; and
the transmission unit modulates light rays of the incident concentration point into light rays of an emergent concentration point on an emergent surface of the transmission unit in a one-to-one correspondence.

4. The floating optical device according to claim 3, wherein the transmission unit is a first optical structure having a light beam deflection function.

5. The floating optical device according to claim 4, wherein the first optical structure comprises any one or a combination of the following: an aspherical optical element, a metasurface optical element, and a diffractive optical element.

6. The floating optical device according to claim 5, wherein when the first optical structure is a metasurface optical element or a diffractive optical element, the first optical structure comprises a first substrate, and a first micro-nano structure disposed on the first substrate.

7. The floating optical device according to any one of claims 1 to 6, wherein both the focusing unit and the convergence unit are second optical structures having a focusing imaging function.

8. The floating optical device according to claim 7, wherein the second optical structure comprises any one or a combination of at least two of the following: a spherical optical element, an aspherical optical element, a metasurface optical element, and a diffractive optical element.

9. The floating optical device according to claim 8, wherein when the second optical structure is a metasurface optical element or a diffractive optical element, the second optical structure comprises a second substrate and a second micro-nano structure disposed on the second substrate.

10. The floating optical device according to any one of claims 1 to 9, wherein a distance between the transmission layer and the focusing layer is equal to a distance between the transmission layer and the convergence unit.

11. The floating optical device according to claim 10, wherein the transmission layer is located between a 1x focal length and a 2x focal length of the focusing unit, and the transmission layer is located between a 1x focal length and a 2x focal length of the convergence unit.

12. The floating optical device according to any one of claims 1 to 11, wherein an array period of the plurality of focusing units is the same as an array period of the plurality of convergence units.

13. The floating optical device according to claim 12, wherein both the array period of the plurality of focusing units and the array period of the plurality of convergence units range from 0.3 mm to 1 mm.

14. The floating optical device according to any one of claims 1 to 13, further comprising a stop, wherein
in the direction of the optical axis, the stop is located between the focusing layer and the transmission layer; or the stop is located between the transmission layer and the convergence layer; or the stop is located on a side that is of the focusing layer and that is away from the transmission layer; or the stop is located on a side that is of the convergence layer and that is away from the transmission layer.

15. An optical module, comprising a support member and the floating optical device according to any one of claims 1 to 14, wherein
the focusing layer, the transmission layer, and the convergence layer are sequentially fastened to the support member in a direction of an optical axis.

16. An optical system, comprising a light source image generator and the optical module according to claim 15, wherein the light source image generator is disposed on a side that is of the focusing layer and that is away from the transmission layer, to generate a light source image.

17. The optical system according to claim 16, wherein the light source image generator is a 2D image display or a 3D image display.
